# EUROPÄISCHE PATENTSCHRIFT

(11) **EP 1 134 171 B1**
(45) Veröffentlichungstag und Bekanntmachung des Hinweises auf die Patenterteilung: **01.12.2004**
(21) Anmeldenummer: 01106709.7
(22) Anmeldetag: 16.03.2001
(51) Int. Cl.: B65G 1/02, B65G 1/08

(54) **Durchlaufregal für Behälter in Kastenform**
Modular gravity feed rack for containers
Etagère inclinée modulaire pour conteneurs

(30) Priorität: 17.03.2000 DE 20004931 U
(43) Veröffentlichungstag der Anmeldung: 19.09.2001
(73) Patentinhaber: BITO-LAGERTECHNIK BITTMANN GmbH, D-55590 Meisenheim (DE)
(72) Erfinder: Kemperdick, Artur, 55758 Niederwörresbach (DE)
(74) Vertreter: Hano, Christian, Dipl.-Ing.

(56) Entgegenhaltungen:
- DE-U- 20 004 931
- DE-U- 29 910 977

## Beschreibung

Die Erfindung betrifft ein Durchlaufregal für Behälter in Kastenform nach dem Oberbegriff des Patentanspruchs 1.

Ein aus der DE 195 48 595 bekanntes Durchlaufregal weist Trennleisten auf, die unabhängig von den Rollenleisten seitlich verstellbar sind. Die Auflageebene der Rollenleisten liegt etwas tiefer als die der Trennleisten. Zur Einstellung der Kanalbreite können die Trennleisten so eingestellt werden, dass sie eine seitliche Führung für Behälter einer bestimmten Breite bilden. Wenn das bekannte Durchlaufregal so eingerichtet wird, dass mehrere kleine Behälter geführt werden, ist eine hohe Anzahl von Trennleisten vorgesehen. Bei einer anschließenden Anpassung des Durchlaufregals an breite Behälter müssen einige dieser Trennleisten herausgenommen werden und die verbleibenden Trennleisten an die Breite der neuen Behälter angepasst werden. In der Praxis führt dies zu dem Problem, dass die entnommenen Trennleisten teilweise verlegt werden und nicht mehr auffindbar sind. Darüber hinaus ist eine anschließende Anpassung des Durchlaufregals an Behälter kleinerer Größe zeitaufwendig, da die Trennleisten wieder an den geeigneten Stellen eingelegt und festgestellt werden müssen.

Die DE 299 10 977 U beschreibt ein gattungsgemäßes Durchlaufregal für Behälter in Kastenform, bei dem die Schiene um ihre Längsachse aus einer Funktionsstellung, in der sie sich wenigstens teilweise über die Auflageebene der Rollenleisten erstreckt, in eine Abklappstellung umklappbar ist, in der sie sich unterhalb der Auflageebene befindet. Das Umklappen ist allerdings nur möglich, wenn sich kein Behälter oberhalb der Schiene befindet.

Der Erfindung liegt die Aufgabe zugrunde, mit konstruktiv einfachen Mitteln ein Durchlaufregal zu schaffen, das in kürzester Zeit an Behälter unterschiedlichster Ausführung und Größe anpassbar ist.

Diese Aufgabe wird erfindungsgemäß durch ein Durchlaufregal mit den Merkmalen des Patentanspruchs 1 gelöst.

Bei dem erfindungsgemäßen Durchlaufregal können die Schienen zur Anpassung an unterschiedliche Behälter je nach Bedarf in die Funktions- oder Abklappstellung geklappt werden. Es ist nicht erforderlich, die Schienen zu demontieren. Die Schienen können je nach Bedarf auch dann aus der Funktions- in die Abklappstellung geklappt werden, wenn sich noch Behälter mit Führungsnut im Boden in dem entsprechenden Kanal des Durchlaufregals befinden.

Bevorzugte Ausführungen einer Schwenklagerung der Schiene des Durchlaufregals sind Gegenstand der Ansprüche 2 bis 4.

Bei einer bevorzugten Ausführungsform ist die Schiene in der Funktionsstellung verrastbar. Hierdurch wird sichergestellt, dass die Schiene nicht abklappt, wenn ein Behälter unsachgemäß in das Durchlaufregal eingesetzt wird.

Bei einer weiteren bevorzugten Ausführungsform beträgt der seitliche Abstand der Mittelachsen der Schienen ein Vielfaches von 33 mm, vorzugsweise 99 mm. Dies ermöglicht es unterschiedliche KLT-Behälter nach DIN 30820 in ihren Längs- bzw. Quernuten zu führen. Zusätzlich ist es möglich, das Durchlaufregal in kürzester Zeit an einen Behälter mit glattem Boden mit und ohne Stapelrand anzupassen. Die Schiene kann daher sowohl als Trennleiste als auch als Führungsschiene verwendet werden. Die Anpassung kann auch durch nicht geschultes bzw. nicht fachkundiges Personal durchgeführt werden.

Wenn die Schiene sehr lang ist, ist es vorteilhaft, die Schiene im mittleren Bereich mit wenigstens einer weiteren an einem mittleren Rahmenverbinder angebrachten Schwenkhalterung zu verbinden, um eine Durchbiegung der Schiene zu verhindern.

Bevorzugt wird die Schiene aus der Funktionsstellung in die Abklappstellung in Richtung der Entnahmeseite geklappt.

Ein Ausführungsbeispiel der Erfindung wird nachstehend anhand von Zeichnungen näher erläutert. Es zeigen:
- Fig. 1: eine Querschnittsansicht eines geraden Durchlaufrahmens eines Durchlaufregals;
- Fig. 2: eine geschnittene Seitenansicht einer ersten Ausführungsform eines Durchlaufrahmens mit einer Schiene in Funktionsstellung;
- Fig. 3: eine geschnittene Seitenansicht des Durchlaufrahmens von Fig. 2 mit der Schiene in Abklappstellung;
- Fig. 4: eine Seitenansicht einer Schwenkhalterung der Schiene von Fig. 3;
- Fig. 5: eine Stirnansicht der Schwenkhalterung von Fig. 4;
- Fig. 6: einen Schwenkhebel;
- Fig. 7: eine geschnittene Seitenansicht einer zweiten Ausführungsform eines Durchlauf rahmens mit einer Schiene in Funktionsstellung;
- Fig. 8: eine geschnittene Seitenansicht des Durchlaufrahmens von Fig. 7 mit der Schiene in Abklappstellung;
- Fig. 9: eine Querschnittsansicht der Schwenklagerung der Schiene von Fig. 7;
- Fig. 10: eine geschnittene Seitenansicht einer dritten Ausführungsform eines Durchlaufrahmens mit einer Schiene in Funktionsstellung;
- Fig. 11: eine geschnittene Seitenansicht des Durchlaufrahmens von Fig. 10 mit der Schiene in Abklappstellung;
- Fig. 12: eine Stirnansicht der Schwenklagerung der Schiene von Fig. 10.
- Fig. 13: eine geschnittene Seitenansicht einer vierten Ausführungsform eines Durchlaufrahmens mit einer Schiene in Funktionsstellung;

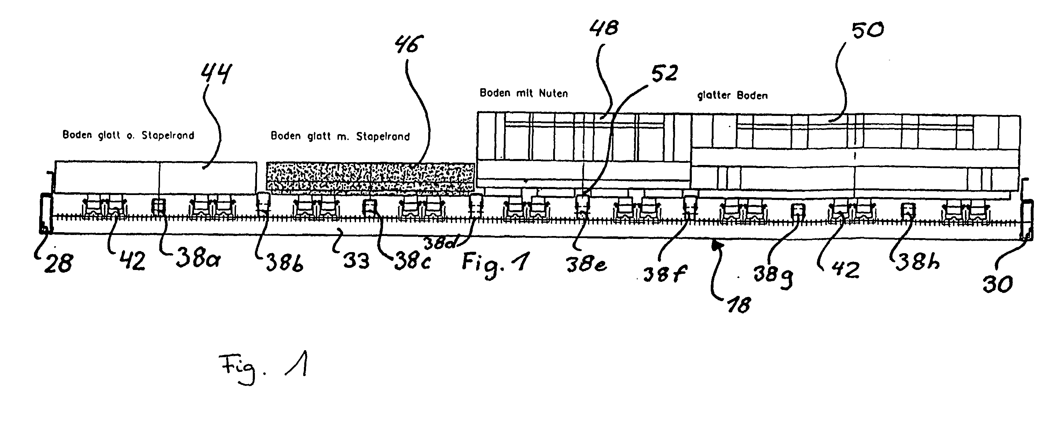

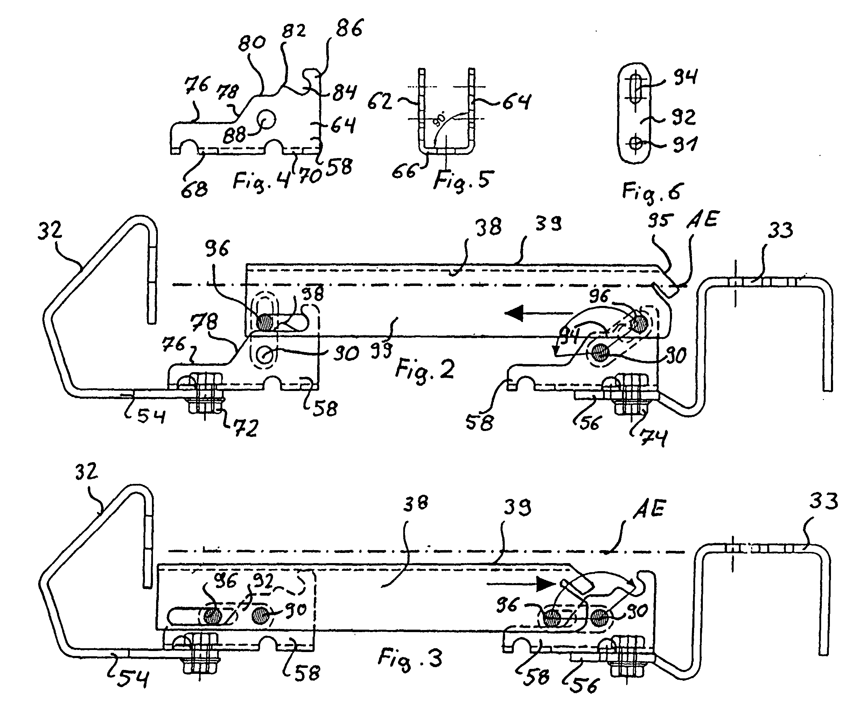

In Fig. 1 ist ein Durchlaufrahmen 18 für ein Durchlaufregal gezeigt, der zwei im Abstand zueinander angeordnete parallele Rahmenseitenteile 28, 30 aufweist, die jeweils an einem seitlichen Stützrahmen (nicht gezeigt) eines Durchlaufregals befestigt sind. Die Rahmenseitenteile 28, 30 sind an ihrem vorderen Ende durch einen vorderen, einen Anschlag bildenden Rahmenverbinder 32 und an ihrem hinteren Ende durch einen hinteren Rahmenverbinder 33 miteinander verbunden, die in Fig. 2 und 3 gezeigt sind.

Die Neigung der Rahmenseitenteile 28, 30 kann nach Wunsch eingestellt werden.

Die Durchlaufebene des Durchlaufrahmens 18 wird von mehreren zu den seitlichen Stützrahmen parallelen Rollenleisten 42 gebildet, die mit ihrem einen Ende an dem vorderen Rahmenbinder 32 und mit ihrem anderen Ende an dem hinteren Rahmenbinder 33 beispielsweise durch eine Steckverbindung, Verschrauben oder Verschweißen befestigt sind.

Wie es in Fig. 1 gezeigt ist, sind jeweils zwischen zwei benachbarten Rollenleisten 42 Schienen 38a bis 38h mit nach unten offenem U-förmigem Querschnitt angeordnet. Die Schienen 38b, d, e, f befinden sich in einer Funktionsstellung, in der sich ihre Oberseite 39 oberhalb der Auflageebene der Rollenleisten 42 befindet und parallel dazu verläuft. Die Schienen 38a, c, g, h sind in eine Abklappstellung geklappt, in der sie unterhalb der Auflageebene der Rollenleisten 42 liegen.

Wie es in Fig. 1 gezeigt ist, wird auf diese Weise von der Schiene 38b und dem Rahmenseitenteil 28 eine seitliche Führung für einen glatten Behälter 44 ohne Stapelrand gebildet, unter dem sich die abgeklappte Schiene 38a befindet. Die Schiene 38b bildet außerdem zusammen mit der in die Funktionsstellung geklappten Schiene 38d eine Führung für einen Behälter 46 mit glattem Boden und Stapelrand. Die Schiene 38d und die Schiene 38f bilden eine seitliche Führung für einen Behälter 48 mit Stapelrand und einer mittleren Längsnut 52, in die die ebenfalls in die Funktionsstellung geklappte Schiene 38e eingreift. Auf der in Fig. 1 rechten Seite wird ein Behälter 50 mit glattem Boden und Stapelrand durch die in Funktionsstellung geklappte Schiene 38f und durch das rechte Rahmenseitenteil 30 geführt. Die in die Abklappstellung geklappten Schienen 38g und 38h befinden sich unterhalb der Bodenfläche des Behälters 50. Der Abstand der einzelnen Schienen 38a bis 38h ist so gewählt, dass der Abstand der Mittelachsen zweier benachbarter in Funktionsstellung geklappter Schienen 38 99 mm oder ein Vielfaches von 33mm beträgt. Dieser Abstand ist insbesondere für KLT-Behälter nach DIN 30820 geeignet. Bei diesen Behältern können die Schienen 38a bis h in ihrer Funktionsstellung verbleiben, wobei sie in die Nuten, am Boden der KLT-Behälter eingreifen und an den Seiten des Stapelrandes anliegen, wodurch eine ausgezeichnete Führung gewährleistet ist.

Wie es in Fig. 2 und 3 gezeigt ist, weisen der vordere Rahmenverbinder 32 und der hintere Rahmenverbinder 33 jeweils einen Schenkel 54 bzw. 56 auf. Die Schenkel 54, 56 sind in einer Ebene angeordnet und einander zugewandt. An jedem Schenkel 54, 56 ist eine Schwenkhalterung 58 angeschraubt, die in den Fig. 4 und 5 näher dargestellt ist. Die Schwenkhalterung 58 hat einen nach oben offenen U-förmigen Querschnitt mit zwei gleich ausgebildeten Schenkeln 62, 64, die an ihrem unteren Ende durch einen Steg 66 miteinander verbunden sind. Der Steg 66 weist eine stirnseitige Längsaussparung 68 und eine hintere Längsaussparung 70 auf. Die vordere Schwenkhalterung 58 ist mittels einer durch die stirnseitige Längsaussparung 68 hindurchgehenden Befestigungsschraube 72 an dem Schenkel 54 des vorderen Rahmenverbinders 32 verbunden. Die hintere Schwenkhalterung 58 ist mittels einer durch die hintere Längsaussparung 70 hindurchgehenden Befestigungsschraube 74 an dem Schenkel 56 des hinteren Rahmenverbinders 33 verbunden. Jeder Schenkel 62, 64 der Schwenkhalterungen 58 weist stirnseitig einen tiefer gelegenen horizontalen Abschnitt 76 auf, der über eine Schrägrampe 78 in einen höher gelegenen horizontalen Abschnitt 80 übergeht. An den Abschnitt 80 angrenzend schließt eine sich nach oben erstreckende Nase 82 an, der eine schräg nach unten verlaufende Rastaussparung 84 folgt, deren unteres Ende im wesentlichen auf Höhe des horizontalen Abschnitts 80 liegt. Die Rastaussparung 84 wird nach hinten durch einen Anschlag 86 begrenzt. Unterhalb des Abschnitts 80 ist auf Höhe des Abschnitts 76 eine kreisförmige Lageröffnung 88 in jedem Schenkel 62, 64 ausgebildet.

Wie es in den Fig. 2 und 3 gezeigt ist, ist in den Lageröffnungen 88 eine Achse 90 befestigt, die durch eine Öffnung 91 hindurchgeht, die in einem Ende eines Schwenkhebels 92 vorgesehen ist, der zwischen den Schenkeln 62, 64 angeordnet ist. In dem anderen Ende des in Fig. 6 einzeln gezeigten Schwenkhebels 92 ist ein Langloch 94 vorgesehen, durch das ein Stift oder eine Achse 96 hindurchgeht, der bzw. die in Langlöcher 98 eingreift, die in beiden vertikalen Seiten 99 der Schiene 38 in den unteren Eckbereichen der Schiene 38 vorgesehen sind, wobei die vertikalen Seiten 99 außerhalb der Schenkel 62, 64 liegen.

Wenn sich die Schiene 38 in der in Fig. 2 gezeigten Funktionsstellung befindet, in der die Oberseite 39 oberhalb der Auflageebene AE der Rollenleisten 42 (Fig. 1) liegt, sitzt der Stift 96 am vorderen Ende der Schiene 38 auf dem Abschnitt 80 der vorderen Schwenkhalterung 58 auf. Am hinteren Ende der Schiene 38 befindet sich der Stift 96 in der Rastöffnung 84 und schlägt am äußeren Ende der Langlochöffnung 94 an. Hierdurch wird ein unbeabsichtigtes Abklappen der Schiene 38 verhindert. Das dem hinterem Rahmenverbinder 33 zugewandte Ende der Schiene 38 ist im oberen Bereich nach Bildung einer Kerbe in den vertikalen Seitenwänden 99 nach unten gebogen, wodurch eine Anlaufschräge 95 gebildet wird, die eine Aufsetzen eines mit einer Bodennut versehenen Behälters erleichtert.

Wenn die Schiene 38 aus der in Fig. 2 gezeigten Funktionsstellung in die in Fig. 3 gezeigte Abklappstellung bewegt wird, in der die Oberseite 39 unterhalb der Auflageebene AE liegt, wird sie gegen die Uhrzeigerrichtung verschwenkt bis beide Stifte 96 auf dem tiefer gelegenen Abschnitt 76 der Halterung 58 aufliegen.

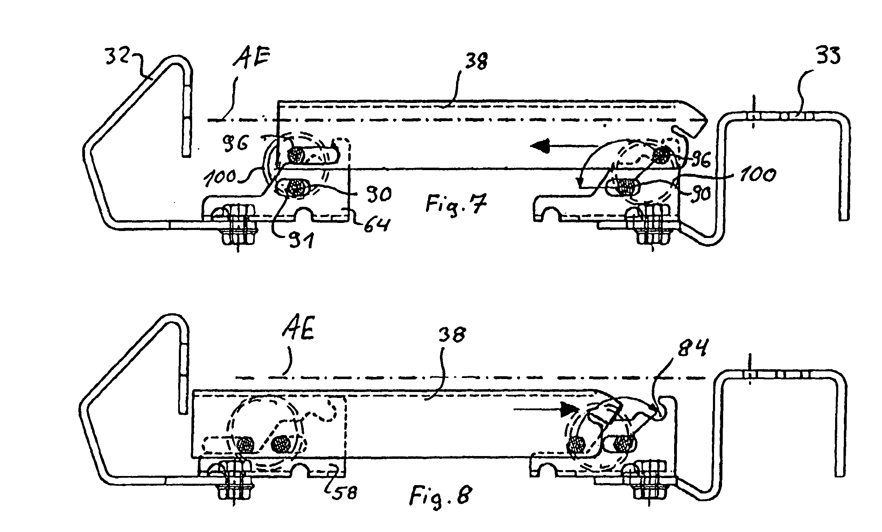

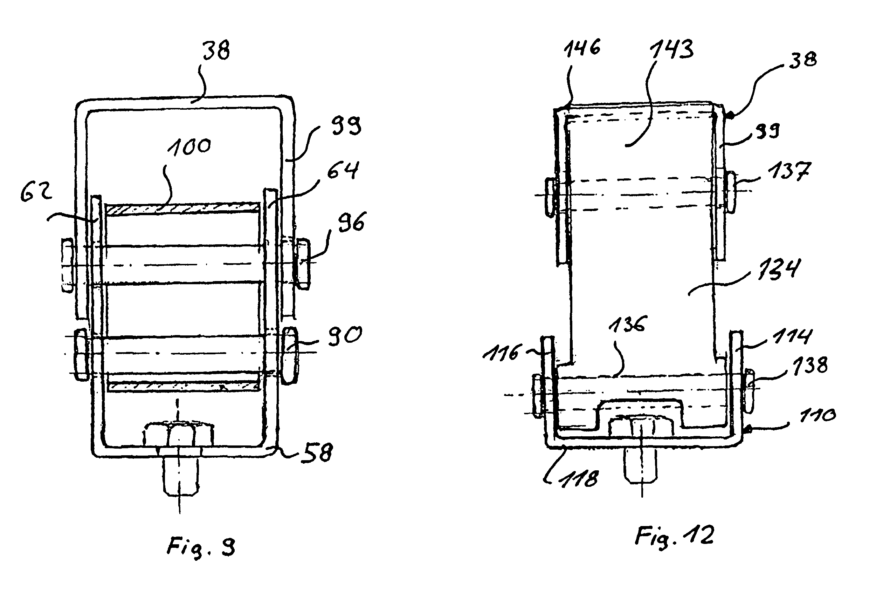

Die in den Fig. 7, 8 und 9 gezeigte Ausführungsform unterscheidet sich von der Ausführungsform nach Fig. 2 und 3 durch die Art der Schwenklagerung der Schiene 38. In den Schwenkhalterungen 58 ist anstatt der kreisförmigen Öffnung 88 eine horizontale Langlochöffnung 91 vorgesehen, durch die der Stift 90 hindurchgeht. Die Stifte 90, 96 werden von einer zwischen den Schenkeln 62, 64 angeordneten Führungshülse 100 umgeben, deren Durchmesser so bemessen ist, dass die Stifte 96 beim Klappen der Schiene 38 in die Funktionsstellung in die Rastaussparungen 84 eingreifen.

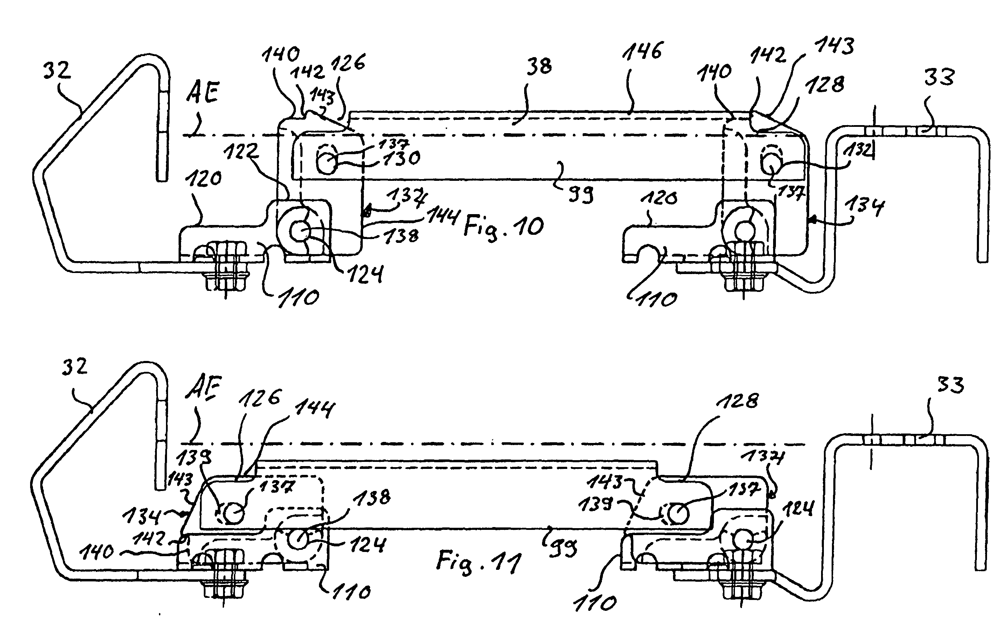

Bei der in den Fig. 10, 11 und 12 gezeigten Ausführungsform ist eine weitere Variante der Schwenklagerung vorgesehen. Die Schwenkhalterungen 110 haben ebenfalls einen nach oben offenen U-förmigen Querschnitt mit zwei gleich ausgebildeten Schenkeln 114, 116, die an ihrem unteren Ende durch einen Steg 118 miteinander verbunden sind. Jeder Schenkel 114, 116, der Schwenkhalterungen 110 weist stirnseitig einen tiefer gelegenen horizontalen vorderen Abschnitt 120 auf, der senkrecht in einen höher gelegenen horizontalen Abschnitt 122 übergeht. Unterhalb des Abschnitts 122 ist auf Höhe des Abschnitts 120 eine kreisförmige Lageröffnung 124 in jedem Schenkel 114, 116 ausgebildet.

Im oberen Bereich des vorderen und hinteren Endes der Schiene 38 ist jeweils eine Ausnehmung 126 bzw. 128 vorgesehen. Unterhalb der Ausnehmung 126 bzw. 128 ist jeweils eine kreisförmige Öffnung 130, 132 in den vertikalen Schenkeln 99 der Schiene 38 ausgebildet.

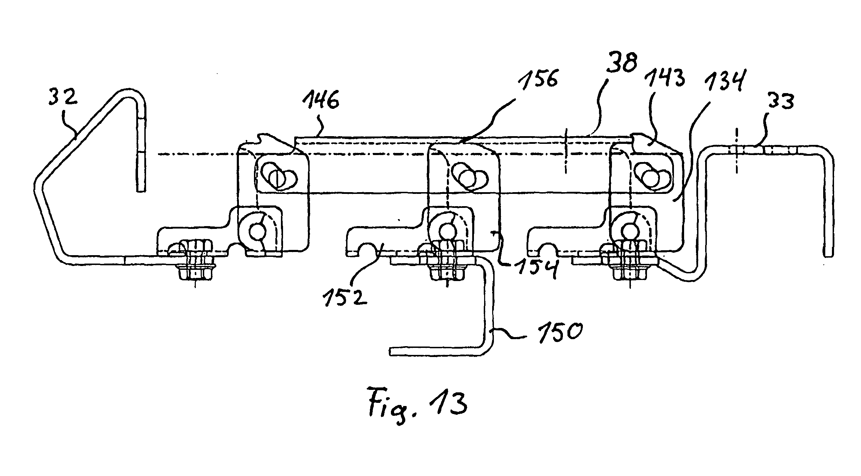

Zwischen den Schenkeln 114, 116 ist ein Lagerblock 134 aus spritzgegossenem Kunstoff schwenkbar gelagert. Der Lagerblock 134 liegt in der in Fig. 11 gezeigten Abklappstellung mit seiner unteren Längsseite auf dem Steg 118 der Schwenkhalterung 110 auf. In der dem hinteren Rahmenverbinder 33 zugewandten unteren Ecke des Lagerblocks 134 ist eine Durchgangsöffnung 136 ausgebildet, die mit den kreisförmigen Lageröffnungen 124 in den Schenkeln 114, 116 fluchtet. Ein Achsstift 138 geht durch die Lageröffnungen 124 und die Durchgangsöffnungen 136 hindurch. Auf Höhe der kreisförmigen Öffnungen 130, 132 ist in dem Lagerblock eine in Abklappstellung horizontale Langlochöffnung 139 ausgebildet. Ein Achsstift 137 geht durch die Langlochöffnung 139 und die kreisförmigen Öffnungen 130, 132 hindurch.

An seiner in Abklappstellung (Fig. 11) vorderen-Stimseite weist der Lagerblock 134 einen unteren vertikalen Abschnitt 140 auf, der sich ungefähr bis auf Höhe des horizontalen Abschnitts 120 der Schwenkhalterung 110 erstreckt. An den vertikalen Abschnitt 140 schließt ein kurzer, sich nach vorne erstreckender horizontaler Abschnitt 142 an, der über eine schräg verlaufenden Abschnitt 143 mit der horizontalen oberen Längsseite 144 in Verbindung steht.

Wenn die Schiene 38 aus der in Fig. 11 gezeigten Abklappstellung in die Funktionsstellung von Fig. 10 und 12 geklappt wird, werden die Lagerböcke 134 um 90□ in Uhrzeigerrichtung verschwenkt. Die Schiene 38 liegt in der Funktionsstellung angrenzend an die hintere Ausnehmung 128 mit dem die vertikalen Schenkel 99 verbindenden Steg 146 auf dem Abschnitt 140 auf, wobei der Steg 146 an den Abschnitt 142 anschlägt, so dass der schräge Abschnitt 143 in die Oberseite des Stegs 146 übergeht. Der schräge Abschnitt 143 bildet somit in der Funktionsstellung eine Anlaufschräge, die ein Aufschieben eines mit einer Bodennut versehenen Behälters erleichtert.

Wenn die Schiene 38 sehr lang ist, ist es vorteilhaft, die Schiene 38 im mittleren Bereich mit wenigstens einer weiteren an einem mittleren Rahmenverbinder 150 angebrachten Schwenkhalterung 152 zu verbinden, um eine Durchbiegung der Schiene 38 zu verhindern, wie es in Fig. 13 gezeigt ist. Die Schwenkhalterung 152 ist wie die Schwenkhalterung 110 der in den Fig. 10 und 11 gezeigten dritten Ausführungsform ausgebildet. Ein Lagerblock 152 ist auf gleiche Weise wie die Lagerblöcke 134 mit der Schwenkhalterung 152 verbunden. Anstatt der Anlaufschräge 143 weist der Lagerblock eine ebene Stirnseite 156 auf, auf der der Steg 146 in der Funktionsstellung aufliegt.

## Patentansprüche

1. Durchlaufregal für Behälter in Kastenform mit wenigstens einer horizontalen oder zur Entnahmeseite hin nach unten geneigten Auflageeinrichtung für die Behälter, die mehrere in Längsrichtung im wesentliche parallele, in einer Ebene angeordnete Rollenleisten (42) umfasst, wobei wenigstens eine im wesentlichen parallel zu den Rollenleisten (42) angeordnete Schiene (38) vorgesehen ist, die aus einer Funktionsstellung, in der sie sich wenigstens teilweise über die Auflageebene (AE) der Rollenleisten (42) erstreckt, in eine Abklappstellung bewegbar ist, in der sie sich unterhalb der Auflageebene (AE) der Rollenleisten (42) befindet, **dadurch gekennzeichnet, dass** die Schiene (38) in ihrer Längsrichtung klappbar ist.

2. Durchlaufregal nach Anspruch 1, **dadurch gekennzeichnet, dass** die Schiene (38) an ihrem vorderen und hinteren Ende mit einem Ende eines Schwenkhebels (92) schwenkbar verbunden ist, der mit seinem anderen Ende an einer Schwenkhalterung (58) angelenkt ist.

3. Durchlaufregal nach Anspruch 1 oder 2, **dadurch gekennzeichnet, dass**
- die Schiene (38) einen nach unten offenen U-förmigen Querschnitt mit zwei vertikalen Schenkel (99) hat,
- im Bereich des vorderen und hinteren Endes der Schiene (38) eine Führungshülse (100) zwischen den Schenkeln (99) angeordnet ist, und
- ein erster Stift (96) durch die Schenkel (99) und die jeweilige Führungshülse (100) und ein zweiter Stift (90) durch eine Schwenkhalterung (58) und die Führungshülse (100) hindurchgeht.

4. Durchlaufregal nach einem der Ansprüche 1 bis 3, **dadurch gekennzeichnet, dass** wenigstens das hintere, einlaufseitige Ende der Schiene (38) über einen Lagerblock (134) an einer Schwenkhalterung (110) gelagert ist, der eine Anlaufschräge (143) bildet, die in der Funktionsstellung in die Oberseite (146) der Schiene (38) übergeht.

5. Durchlaufregal nach einem der vorhergehenden Ansprüche, **dadurch gekennzeichnet, dass** die Schiene (38) in der Funktionsstellung verrastbar ist.

6. Durchlaufregal nach einem der vorhergehenden Ansprüche, **dadurch gekennzeichnet, dass** der seitliche Abstand der Mittelachsen der Schienen (38) ein Vielfaches von 33 mm, vorzugsweise 99 mm beträgt, wenn sich die Schienen (38) in ihrer Funktionsstellung befinden.

7. Durchlaufregal nach einem der vorhergehenden Ansprüche, **dadurch gekennzeichnet, dass** die Schiene (38) im mittleren Bereich mit wenigstens einer weiteren Schwenkhalterung verbunden ist.

8. Durchlaufregal nach einem der Ansprüche 1 bis 6, **dadurch gekennzeichnet, dass** die Schiene (38) aus der Funktionsstellung in die Abklappstellung in Richtung der Entnahmeseite geklappt wird.

9. Durchlaufregal nach einem der Ansprüche 1 bis 6, **dadurch gekennzeichnet, dass** die Schiene (38) aus der Abklappstellung in die Funktionsstellung in Richtung der Entnahmeseite geklappt wird.

## Claims

1. A flow-through rack for box-like containers with at least one support device for the containers, which is horizontal or inclined downwardly towards the discharge end and which comprises a plurality of roller strips (42) arranged in one plane and substantially parallel in the longitudinal direction, wherein at least one rail (38) disposed substantially parallel to the roller strips (42)is provided, which rail can move from an operating position in which it extends at least partly over the support plane (AE) of the roller strips (42) into a swung-down position in which it is situated below the support plane (AE) of the roller strips (42), **characterised in that** the rail (38) is can be swung in its longitudinal direction.

2. A flow-through rack according to Claim 1, **characterised in that** at its front end and rear end the rail (38) is pivotably connected to one end of a pivoted lever (92) which at its other end is articulated to a pivoted mounting (58).

3. A flow-through rack according to Claim 1 or 2, **characterised in that**
- the rail (38) is of downwardly open U-shaped cross-section with two vertical arms (99),
- in the vicinity of the front end and rear end of the rail (38) a guide sleeve (100) is arranged between the arms (99), and
- a first pin (96) passes through the arms (99) and the respective guide sleeve (100) and a second pin (90) passes through a pivoted mounting (58) and the guide sleeve (100).

4. A flow-through rack according to any one of Claims 1 to 3, **characterised in that** at least the rear end of the rail (38) on the inlet side is mounted on a pivoted mounting (110) via a bearing block (134) which forms a lead-in slope (143) which in the operating position merges into the upper side (146) of the rail (38).

5. A flow-through rack according to any one of the preceding Claims, **characterised in that** the rail (38) can be located in the operative position.

6. A flow-through rack according to any one of the preceding Claims, **characterised in that** the lateral distance apart of the centre axes of the rails (38) is a multiple of 33 mm, preferably 99 mm, when the rails (38) are situated in their operative position.

7. A flow-through rack according to any one of the preceding Claims, **characterised in that** the rail (38) is connected in its central region to at least one further pivoted mounting.

8. A flow-through rack according to any one of the Claims 1 to 6, **characterised in that** the rail (38) is swung out of the operating position towards the discharge end into the swung-down position.

9. A flow-through rack according to any one of the Claims 1 to 6, **characterised in that** the rail (38) is swung out of the swung-down position towards the discharge end into the operating position.

## Revendications

1. Couloir de roulement pour conteneurs en forme de caisse, avec au moins un dispositif de pose des conteneurs horizontal ou incliné vers l'arrière du côté du prélèvement, comprenant plusieurs baguettes à roulettes (42) sensiblement parallèles dans le sens de la longueur et disposées dans un plan, au moins un rail (38) sensiblement disposé à la parallèle des baguettes à roulettes (42), qui est mobile à partir d'une position de fonctionnement, dans laquelle il s'étend partiellement par-dessus le plan d'appui (AE) des baguettes à roulettes (42) dans une position de rabattage, dans laquelle il se trouve en dessous du plan d'appui (AE) des baguettes à roulettes (42) étant prévu, **caractérisé en ce que** le rail (38) est rabattable dans sa direction longitudinale.

2. Couloir de roulement selon la revendication 1, **caractérisé en ce que** sur son extrémité antérieure et postérieure, le rail (38) est relié de manière pivotable à une extrémité d'un levier pivotant (92), qui par son autre extrémité est articulé sur une fixation pivotante (58).

3. Couloir de roulement selon l'une quelconque des revendications 1 ou 2, **caractérisé en ce que**
- le rail (38) a une section transversale en forme de U ouverte vers le bas, avec deux branches verticales (99),
- une douille de guidage (100) est disposée entre les branches (99), dans la zone de l'extrémité antérieure et postérieure du rail (38) et
- une première tige (96) traverse les branches (99) et la douille de guidage respective (100) et une seconde tige (90) traverse une fixation pivotante (58) et la douille de guidage (100).

4. Couloir de roulement selon l'une des revendications 1 à 3, **caractérisé en ce qu'**au moins l'extrémité postérieure du rail (38) située côté entrée est logée sur une fixation pivotante (110) par l'intermédiaire d'un bloc de support (134) qui forme une inclinaison de démarrage (143), qui dans la position de fonctionnement passe dans la face supérieure (146) du rail (38).

5. Couloir de roulement selon l'une quelconque des revendications précédentes, **caractérisé en ce que** le rail (38) peut s'enclencher dans la position de fonctionnement.

6. Couloir de roulement selon l'une quelconque des revendications précédentes, **caractérisé en ce que** la distance latérale entre les axes centraux des rails (38) correspond à un multiple de 33 mm, de préférence à 99 mm, lorsque les rails (38) se trouvent dans leur position de fonctionnement.

7. Couloir de roulement selon l'une quelconque des revendications précédentes, **caractérisé en ce que** dans la zone centrale, le rail (38) est relié avec au moins une fixation pivotante supplémentaire.

8. Couloir de roulement selon l'une quelconque des revendications 1 à 6, **caractérisé en ce que** le rail (38) est rabattu de la position de fonctionnement dans la position abaissée en direction du côté de prélèvement.

9. Couloir de roulement selon l'une quelconque des revendications 1 à 6, **caractérisé en ce que** le rail (38) est amené de la position abaissée dans la position de fonctionnement en direction du côté de prélèvement.
